# EUROPÄISCHE PATENTSCHRIFT

(11) **EP 3 156 216 B1**
(45) Veröffentlichungstag und Bekanntmachung des Hinweises auf die Patenterteilung: **02.09.2020**
(21) Anmeldenummer: 15002911.4
(22) Anmeldetag: 13.10.2015
(51) Int. Cl.: B29C 64/118, B29C 64/209

(54) **VORRICHTUNG UMFASSEND EINEN MOBILEN DRUCKKOPF SOWIE ENTSPRECHENDES VERFAHREN**
APARATUS COMPRISING A MOBILE PRINT HEAD AND CORRESPONDING PROCESS
TETE D'IMPRESSION MOBILE ET PROCÉDÉ CORRESPONDANT

(43) Veröffentlichungstag der Anmeldung: 19.04.2017
(73) Patentinhaber: Collin Lab & Pilot Solutions GmbH, 83558 Maitenbeth (DE)
(72) Erfinder: Grajewski, Franz, 83512 Wasserburg (DE)
(74) Vertreter: Lindermayer, Ludwig Sebastian

(56) Entgegenhaltungen:
- EP-A1- 2 537 642
- EP-A2- 0 806 280
- DE-A1-102011 119 337

## Beschreibung

Die Erfindung betrifft eine Vorrichtung zur Herstellung dreidimensionaler Formteile umfassend einen mobilen Druckkopf für Kunststoffschmelzen, der automatisch befüllt wird, sowie ein entsprechendes Verfahren.

In Fused Deposition Modeling - Verfahren (FDM) oder Schmelzbeschichtungsverfahren werden 3 dimensionale Werkstücke oder Formteile auf Basis digitaler Vorlagen oder Informationen schichtweise aus schmelzfähigem Kunststoff aufgebaut. Die einzelnen Schichten verbinden sich zu einem komplexen Formteil.

Aufgrund der geringen Baugröße von FDM-Anlagen ist deren Einsatz jedoch auf die Herstellung relativ kleiner Formen beschränkt.

Der Kunststoff wird dabei in der Regel durch Erwärmen geschmolzen, dann durch Extrudieren mittels einer Düse schichtweise aufgebracht, anschließend definiert abgekühlt und damit gehärtet.

Für größere Werkstücke bzw. Formteile steigt der notwendige Durchsatz der Kunststoffschmelze, der mit den bekannten FDM-Anlagen nicht realisierbar ist. Aus EP 0 426 363 ist eine Vorrichtung und ein Verfahren zur Herstellung dreidimensionaler Gegenstände bekannt.

Dabei wird ein Kunststoffstrang einer Dosiervorrichtung zugeführt, in dieser erwärmt, sodass ein Kunststoffschmelze entsteht und anschließend über eine Düse in mehreren Lagen übereinander auf einem Trägerteil in einem gewünschten Muster aufgebracht.

Dabei ist die Kapazität der Vorrichtung vor allem durch die Dimension der Dosiervorrichtung bzw. durch die Kapazität des Bereichs, in dem der feste Kunststoffstrang in der Dosiervorrichtung geschmolzen wird, begrenzt.

Für größere Formteile, beispielsweise bis zu 1000x1000x2000 mm³ müssten die Dimensionen dieser Dosiervorrichtung hohe Lasten an Ausgangsmaterial aufnehmen und schmelzen können um die Herstellung der Formteile in akzeptabler Zeit zu ermöglichen.

Es wäre denkbar, eine entsprechend groß dimensionierte Dosiervorrichtung an einem Roboterarm eines mehrachsigen Roboters zu platzieren. Da aber bei großen Formteilen beliebige, große Raumkurven abgefahren werden müssen, um das gewünschte Formteil schichtweise herzustellen, ergibt sich die Schwierigkeit eine konstante Zufuhr des Ausgangmaterials zur Dosiervorrichtung zu gewährleisten.

Es ist auch bekannt, anstelle eines festen Kunststoffstrangs Kunststoffgranulat als Ausgangsmaterial zu verwenden. Dadurch wird zwar die Schmelzdauer des Ausgangsmaterials relativ verkürzt das Problem der konstanten Zuführung des Ausgangsmaterials bei relativ großen benötigten Mengen bleibt jedoch bestehen. Aus der EP0806280 A2 ist eine Vorrichtung zur Aufbereitung von Kunststoffgut mit nachgeschaltetem Extruder bekannt. Aus der EP2537642 A1 ist eine Vorrichtung zum Herstellen von Objekten bekannt, wobei ein Objekt entlang 6 Achsen relativ zu einem Druckkopf bewegt wird.

Aufgabe der Erfindung war es daher, eine Vorrichtung, insbesondere einen Druckkopf bereitzustellen, der in der Lage ist, größere Mengen an Ausgangsmaterial zur Herstellung großer dreidimensionaler Formteile zu verarbeiten, bei dem kontinuierliche Befüllung gewährleistet ist.

Eine weitere Aufgabe der Erfindung war es, ein Verfahren zur Herstellung großer dreidimensionaler Formteile bereitzustellen, das es erlaubt, diese Formteile in einer akzeptablen Zeit herzustellen.

Gegenstand der Erfindung ist daher eine Vorrichtung zur Herstellung dreidimensionaler Formteile definierter Form durch aufeinanderfolgende Ablagerung von mehreren Schichten eines sich verfestigenden Kunststoffs auf einem Ablagetisch umfassend:
einen beweglichen Druckkopf bestehend aus einer beheizten Ausdrückeinheit, einer Vorschubeinheit und einer Düse, durch die die Kunststoffschmelze zur Herstellung eines dreidimensionalen Formteils austritt sowie einer Verschlusseinheit, die beim Druckvorgang mit einem Verschlusselement verschlossen ist, wobei der Druckkopf an einem steuerbaren beweglichen Werkzeug fixiert ist, das die für das herzustellende Formteil notwendigen Raumkurven abfahren kann,
und einen Extruder zur Aufbereitung der Kunststoffschmelze, der auf einem Befülltisch fixiert ist und zur Befüllung des Druckkopfs mit Kunststoffschmelze mit der Verschlusseinheit des Druckkopfs druckdicht verbunden wird.

Ein weiterer Gegenstand der Erfindung ist daher ein Verfahren zur Herstellung dreidimensionaler Formteile, gekennzeichnet durch folgende Verfahrensschritte:
-) Bereitstellen einer Kunststoffschmelze in einer an einem steuerbaren beweglichen Werkzeug fixierten beheizten Ausdrückeinheit, die mit einer Vorschubeinheit, einer Verschlusseinheit mit einem Verschlusselement und einer Düse zum Durchtritt der Kunststoffschmelze versehen ist und einen beweglichen Druckkopf bildet, wobei die Ausdrückeinheit aus einem Tank verbunden mit einem Ausdrückkolben oder einer Förderschnecke besteht,
-) Erzeugen einer relativen Bewegung des beweglichen Druckkopfs in drei Dimensionen zur Ablage der Kunststoffschmelze in einer vorbestimmten Folge und in einem vorbestimmten Muster auf einem Trägerteil durch Steuerung des beweglichen Werkzeugs, wobei die Steuerung der Vorschubgeschwindigkeit des Ausdrückkolbens bzw. der Förderschnecke über die Vorschubeinheit erfolgt,
-) Erkennen der Notwendigkeit eines Befüllen des beweglichen Druckkopfs durch die Steuerung anhand der Position des Ausdrückkolbens bzw. der Förderschnecke,
-) Bewegen des beweglichen Druckkopfs durch das, durch die Steuerung gesteuerten, beweglichen Werkzeugs zu einer ersten Position an einem Befülltisch,
-) Öffnen bzw. Entfernen des Verschlusselements der Verschlusseinheit,
-) Bewegen des beweglichen Druckkopfs zu einer zweiten Position am Befülltisch,
-) Verbinden der Verschlusseinheit des beweglichen Druckkopfs mit einem Extruder in der Weise, dass eine druckdichte Verbindung zwischen Verschlusseinheit und Extruder entsteht,
-) Befüllen des Zylinders des beweglichen Druckkopf mit Kunststoffschmelze aus dem Extruder,
-) Bewegen des befüllten beweglichen Druckkopfs zur ersten Position am Befülltisch,
-) Verschließen der Verschlusseinheit mit dem Verschlusselement
-) Fortsetzen der Ablage der Kunststoffschmelze in einer vorbestimmten Folge und in einem vorbestimmten Muster auf einem Trägerteil zur Herstellung eines dreidimensionalen Formteils.

In der Vorrichtung und dem Verfahren zur Herstellung dreidimensionaler Formteile ist die Aufbereitung der Schmelze und der Druckvorgang entkoppelt. Das bedeutet, dass die Kunststoffschmelze in einer externen Vorrichtung, beispielsweise in einem Extruder bereitgestellt wird und nicht erst im beweglichen Druckkopf erzeugt wird.

Dabei wird erfindungsgemäß eine beheizte Ausdrückeinheit zur Aufnahme einer Kunststoffschmelze eingesetzt, die vorher extern beispielsweise in einem Extruder erzeugt wird.

Als Kunststoffmaterialien werden bevorzugt thermoplastische Kunststoffe eingesetzt, beispielswese Polyolefine, PEN, ABS , PMMA, PC, PVC, PLA, Polypropylene, Polyethylen, Polyester, wie PET, und dergleichen. Die thermoplastischen Kunststoffe können mit Mineralien, Metallen, mit organischen Stoffen, organischen und anorganischen Fasern, gefüllt bzw. mit Wirkstoffen, Additiven, Farbstoffen, Pigmenten, pharmazeutischen und kosmetischen Wirkstoffen versehen sein.

Die beheizte Ausdrückeinheit ist mit einer Düse versehen, die den Austritt der Kunststoffschmelze zur Herstellung eines dreidimensionalen Formteils erlaubt.

Die beheizte Ausdrückeinheit kann dabei aus einem beheizten Zylinder bzw. Tank mit einem Ausdrückkolben bestehen, wobei der Ausdrückkolben linear oder durch einen Spindelantrieb bewegt werden kann.

Alternativ kann die Ausdrückeinheit auch aus einer beheizten, in einem beheizten Tank situierten Förderschnecke bestehen.

Beheizt wird die Ausdrückeinheit vorzugsweise elektrisch mit Heizbändern, Heizpatronen, oder durch Strahlungsheizkörper, gegebenenfalls auch unter Einsatz von Wärmeträgermedien wie Thermoöl oder Wasser oder Wasserdampf oder Heißluft.

Der beheizte Ausdrückeinheit ist mit einer Vorschubeinheit gekoppelt, die die Vorschubgeschwindigkeit des Ausdrückkolbens bzw. der Schnecke regelt.

Die Vorschubgeschwindigkeit des Ausdrückkolbens bzw. der Schnecke wird dabei so geregelt, dass die gewünschte Dicke der Kunststoffschmelze (Raupendicke) für die Erzeugung der gewünschten Geometrie an jeder Stelle des Formteils aus der Düse austritt. Die Düse kann je nach Erfordernis einen kreisförmigen, eckigen oder polygonen Querschnitt aufweisen. Vorteilhafterweise kann die Düse je nach Druckbreite gegen eine andere Düse geeigneter Dimension über ein Magazin ausgetauscht werden. Alternativ kann auch eine sogenannte Variodüse mit innenliegendem Torpedo verwendet werden. Das Verschlussventil der Düse kann in die Düse integriert sein, das heißt, die Düse kann als sogenannte Nadelverschlussdüse ausgeführt sein. Dies ist besonders vorteilhaft, da dadurch Schmelzefäden verhindert werden können. Außerdem kann die Strangstärke im Betrieb beliebig moduliert werden.

Zur Regulierung der Austrittsmenge an Kunststoffschmelze aus der Düse ist die Steuerung der Vorschubgeschwindigkeit des Ausdrückkolbens bzw. der Schnecke mit der Position im Raum und der Bewegungsgeschwindigkeit des steuerbaren beweglichen Werkzeugs, an dessen Arm der Druckkopf befestigt ist, verknüpft.

Als steuerbares bewegliches Werkzeug kommt beispielsweise ein Roboterarm in Frage. Anstelle des Roboterarms kann der Druckkopf aber auch an einer Fräsmaschine oder Drehmaschine anstelle des sonst üblichen Werkzeugs montiert sein. Geeignet sind dabei 3-Achs- oder 5-Achs- Bearbeitungsmaschinen wie Dreh/Fräszentren oder Drehmaschinen und dergleichen. Diese Anordnung ist dann wie ein Bearbeitungswerkzeug zu betrachten, wobei die Drehbewegung des Werkzeugs dabei dann als Antrieb für die Ausdrückeinheit verwendet werden kann.

Der Ablagetisch, auf dem die Kunststoffschmelze in einem definierten gewünschten Muster zur Herstellung eines dreidimensionalen Formteils abgelegt wird, kann in horizontaler und/oder vertikaler Richtung bewegbar sein. Dabei kann die Bewegung jeweils sowohl linear als auch nicht linear gesteuert werden. Die Bewegung kann jeweils entlang der x-, y- oder z-Achse erfolgen als auch entlang zweier oder aller drei Achsen gleichzeitig.

Dabei können beim Druckvorgang die Bewegung des mobilen Druckkopfs und des Ablagetisches einander überlagern oder ergänzen.

Die Aufbereitung der zur verdruckenden Kunststoffschmelze erfolgt in einem externen Extruder.

Der Extruder ist dabei in oder neben der Bearbeitungszelle, in der sich der Druckkopf befindet, situiert. Der Extruder kann mit einem Schmelzefilter und einem Schmelzeventil ausgestattet sein.

Die Ausdrückeinheit dockt am Extruder an. Um ein sauberes Andocken zu ermöglichen, ist die Andockeinheit vorteilhafterweise als Konus ausgeführt. Da der mechanische Anpressdruck durch das steuerbare bewegliche Werkzeug für die Herstellung einer druckdichten Verbindung zu gering sein kann, kann die Einheit beim Befüllen mechanisch durch eine Klemmvorrichtung verriegelt werden.

Geeignet sind dabei Ein- und Mehrschneckenextruder, die gleich und gegenlaufend ausgeführt sein können. Alternativ kann als Aufbereitungseinheit für die Kunststoffschmelze auch eine Schmelzepumpe, aber auch eine Kombination eines Schmelzebad mit einer Schmelzepumpe verwendet werden.

Dabei können dem Extruder (je nach Bauart des Extruders) Kunststoffgranulat oder aber auch Kunststoffstränge und dergleichen zur Aufbereitung einer Schmelze zugeführt werden.

Es können auch mehrere Extruder, oder Zwei- oder Mehrschneckenextruder oder Schmelzetanks bzw. -bäder mit Schmelzepumpen eingesetzt werden um unterschiedliche Kunststoffmaterialien oder Farben innerhalb eines herzustellenden Formteils zu verdrucken.

In einer weiteren Ausführungsform können auch mehrere Druckköpfe in einem Magazin vorgehalten werden, um unterschiedliche Kunststoffmaterialien und/oder Farben schnell zu wechseln.

Alternativ kann aus dem Druckkopf nicht mehr benötigtes Kunststoffmaterial entsorgt werden, der Druckkopf gespült und anschließend mit neuem unterschiedlichen Kunststoffmaterial aus einem weiteren Extruder oder Schmelzebad befüllt werden.

Die Steuerung erkennt anhand der Position des Ausdrückkolbens im Zylinder die Notwendigkeit einer Befüllung des Zylinders. Die Position des Ausdrückkolbens wird dabei über einen Lineargeber abgefragt. Alternativ kann, bei Spindelantrieb des Kolbens auch die Position anhand der Umdrehungen gerechnet werden (Inkrementalgeber).

Dementsprechend wird die Ausdrückeinheit im Falle der Notwendigkeit eines Befüllvorgangs durch den Roboterarm bzw. durch das steuerbare bewegliche Werkzeug auf dem der Druckkopf fixiert ist, auf dem Befülltisch in der Weise positioniert, dass der Extruder über die an der Ausdrückeinheit situierte Verschlusseinheit druckdicht mit der Ausdrückeinheit verbunden werden kann.

Vorteilhafterweise ist die Verschlusseinheit und die Andockeinheit des Extruders als Innen- und Außenkonus ausgeführt.

Die druckdichte Verbindung wird dabei entweder über die in der Verschlusseinheit und der Andockeinheit des Extruders vorhandene Schmelzeventile oder durch ein Nadelverschlussventil realisiert.

Dazu wird in der ersten Position, die der Zylinder am Befülltisch einnimmt, das Verschlusselement, das die Verschlusseinheit während eines Druckvorgangs verschließt entfernt bzw. das Verschlussventil geöffnet.

Anschließend wird der Zylinder weiterbewegt zu einer zweiten Position, in der nun der Zylinder mit dem Extruder druckdicht verbunden wird.

Die Steuerung löst nach druckdichter Anbindung des Extruders an die Ausdrückeinheit den Befüllvorgang aus.

Dabei wird der Ausdrückkolben im beheizten Tank wieder in seine Ausgangposition zurückbewegt. Alternativ kann anstelle des Ausdrückkolbens oder zusätzlich zum Ausdrückkolben eine Schmelzepumpe verwendet werden. Gegebenenfalls kann der Ausdrückkolben bei Befüllungsvorgang auch aktiv durch die Vorschubeinheit bewegt werden, um Platz für die einfließende Kunststoffschmelze zu machen.

Wird als Ausdrückeinheit eine in einem Tank situierte Förderschnecke verwendet, so rotiert diese bei der Befüllung in der der Ausdrückrichtung entgegengesetzten Richtung.

Um Verunreinigungen durch den Ausdrückkolben oder die Schnecke oder die Schmelzepumpe zu vermeiden, kann ein Schmelzefilter vor der Düse angebracht sein.

Um den beim Befüllvorgang entstehenden Druck auf das Ausdrückwerkzeug, also den Ausdrückkolben oder die Schnecke zu übertragen, kann gegebenenfalls eine Verriegelungsvorrichtung mittels Sperrbolzen oder einer Klammer, wie einer C-Clamp, vorgesehen sein

Nach Abschluss des Befüllvorgangs wird der Zylinder durch die Steuerung in die erste Position zurückgeführt. Hier wird das Verschlusselement auf die Verschlusseinheit wieder aufgesetzt.

Ist die Verschlusseinheit mit einem Ventil versehen, kann die Verschlusseinheit des mobilen Druckkopfs direkt an den Extruder angekoppelt werden, die Manipulation des Entfernens und Wiederaufsetzen eines Verschlusselements entfällt in diesem Fall.

Der Druckkopf ist nun bereit für einen weiteren Druckvorgang.

Die beschriebene Vorgehensweise wird solange wiederholt, bis der Druckvorgang des gesamten dreidimensionalen Formteils abgeschlossen ist. Durch die Entkopplung des Vorgangs der Aufbereitung der Schmelze und des Druckvorgangs können auch große Formteile mit Dimensionen von beispielsweise bis zu 1000x1000x2000 mm³ oder größer innerhalb akzeptabler Zeit hergestellt werden.

In einer Ausführungsform kann auch vorgesehen sein, mehrere mobile Druckköpfe in einer Einheit vorzusehen.

Während ein mobiler Druckkopf einen Druckvorgang ausführt, können einer oder mehrere weitere mobile Druckköpfe bereits durch jeweils druckdichtes Verbinden mit ggf. mehreren Extrudern oder einem Mehrschneckenextruder befüllt werden. Sobald der erste Druckkopf neu zu befüllen ist, übernimmt ein bereits befüllter weiterer Druckkopf den weiteren Druckvorgang, der erste mobile Druckkopf wird währenddessen erneut befüllt.

Durch die Verwendung eines beheizten beweglichen Druckkopfs wird die Kunststoffschmelze nach dem Befüllvorgang auf konstanter Temperatur gehalten, sodass die Kunststoffschmelze bei gleichbleibender Qualität und Temperatur dem Druckvorgang zugeführt wird. Dabei kann die Temperatur in der Ausdrückeinheit gleich oder höher oder niedriger sein als die Temperatur im Extruder bzw. im Schmelzebad. Insbesondere bei kritischen Materialien, die leicht einer Degradierung oder Zersetzung unterliegen, wird die Temperatur im Extruder bzw. Schmelzebad auf niedrigst möglichem Niveau gehalten, die für einen einwandfreien Druckvorgang nötige Temperatur wird dann erst in der Ausdrückeinheit erreicht.

Der Tank der Ausdrückeinheit ist vorteilhafterweise aus üblichen Werkzeugstählen gefertigt, die entsprechend temperaturbeständig und ggf. korrosionsgeschützt sind,.

Die Düse besteht aus gehärtetem Stahl, beispielsweise 1.2316, 1.2344, oder dergleichen oder aus hochwärmeleitfähigen Legierungen, wie beispielsweise Cu/Al-Bronzen. Die Verwendung hochwärmeleitfähiger Materialien für die Herstellung der Düse ist dann empfehlenswert, wenn es aufgrund der Eigenschaften des zu verdruckenden Kunststoffs und des gewählten bzw. erforderlichen Temperaturbereichs notwendig ist, die Wärmeverluste möglichst gering zu halten, da so die Wärme bis an die Düsenspitze gebracht und erhalten wird.

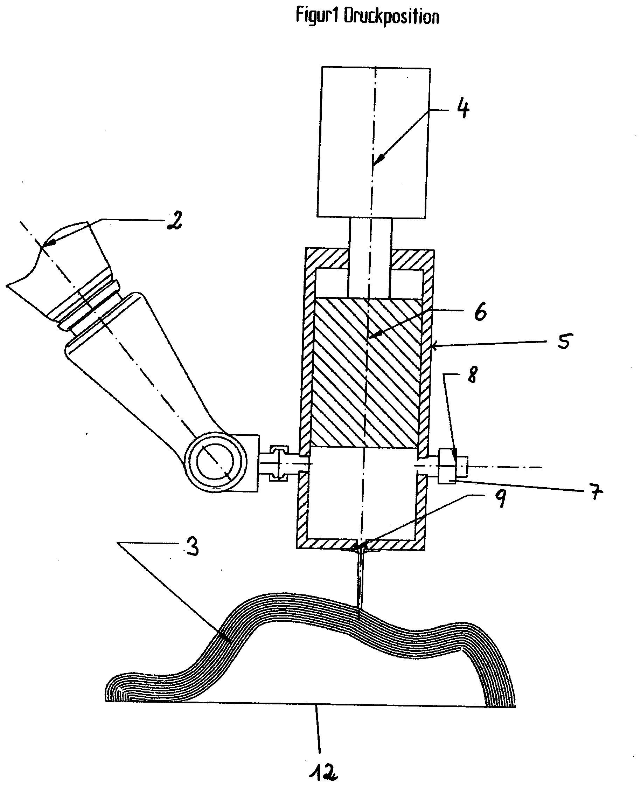

In den Figuren 1 bis 3 sind eine Ausführungsform des erfindungsgemäßen beweglichen Druckkopfs bzw. erfindungsgemäße Verfahrensschritte dargestellt. Dabei ist die Ausdrückeinheit durch einen zylinderförmigen Tank mit einem Ausdrückkolben gebildet, das steuerbare bewegliche Werkzeug ist durch einen Roboterarm gebildet.

### Dabei bedeuten

1 den beweglichen Druckkopf
2 den Arm des Roboters an dem der bewegliche Druckkopf befestigt ist
3 ein gedrucktes Formteil
4 eine Vorschubeinheit
5 den beheizten Zylinder
6 den beheizten Ausdrückkolben
7 die Verschlusseinheit
8 das Verschlusselement, hier in Form eines Verschlussstopfens
9 die Düse zum Austritt der Kunststoffschmelze
10 den Extruder
11 den Befülltisch
12 das Ablagetisch

Figur 1 zeigt dabei den Druckvorgang zu Herstellung eines dreidimensionalen Formteils.

Dabei wird durch die Bewegung des Roboterarms 2, der durch eine Steuereinheit gesteuert wird, das dreidimensionale Formteil 3 auf einem Ablagetisch 12 in mehreren Schichten erzeugt. Die Vorschubeinheit 4 wird dabei derart gesteuert, dass durch die Bewegung des Ausdrückkolbens 6 des beweglichen Druckkopfs 1 jeweils die gewünschte Raupendicke durch die Düse 9 austritt.

Die Steuerung des Roboterarms und der Vorschubeinheit erfolgt üblicherweise über bekannte CAM Systeme.

Der bewegliche Druckkopf 1 besteht aus einem beheizten Zylinder 5, einem beheizten Ausdrückkolben 6 und weist eine Verschlusseinheit 7, die in der Druckposition mit einem Verschlussstopfen 8 verschlossen ist, sowie der Düse 9 zum Austritt der Kunststoffschmelze.

Beim Druckvorgang kann der Ablagetisch 12 ebenfalls bewegt sein, wodurch sich die Bewegungen des Druckkopfs und des Ablagetisches ggf. überlagern und/oder ergänzen können und entsprechend zur Formung des Werkstücks beitragen.

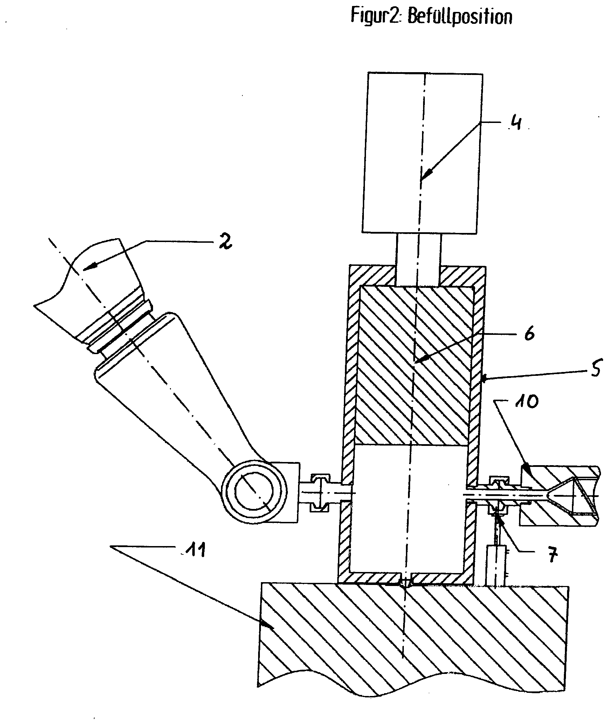

In Figur 2 ist die Position beim Befüllen des beweglichen Druckkopfs 1 dargestellt.

Dabei wurde der bewegliche Druckkopf 1 durch den Roboterarm 2 nach Erkennen der Notwendigkeit eines Befüllvorgangs durch die Steuerung wie oben beschrieben zum Befülltisch 11 bewegt und nach Entfernung des Verschlusstopfens 8 dort druckdicht über die Verschlusseinheit 7 mit einem Extruder 10 verbunden.

Über die Verbindung des Extruders 10 mit der Verschlusseinheit 7 wird der Zylinder 5 des beweglichen Druckkopfs 1 mit Kunststoffschmelze befüllt Dabei wird der Ausdrückkolben durch die eingebrachte Kunststoffschmelze hochgedrückt. Alternativ kann der Ausdrückkolben durch die Vorschubeinheit aktiv bewegt werden, um den Raum für die Schmelze freizugeben. Diese Bewegung kann beispielsweise anhand eines Drucksignals vor der Schneckenspitze des Extruders gesteuert werden, in dem der Druck vor der Schneckenspitze konstant gehalten wird.

Anschließend wird der mit der Kunststoffschmelze befüllte, bewegliche Druckkopf 1 durch den Roboterarm 2 wieder in eine Druckposition, wie sie in Figur 1 dargestellt ist, gebracht, um den Druckvorgang zur Herstellung des dreidimensionalen Bauteils fortzusetzen.

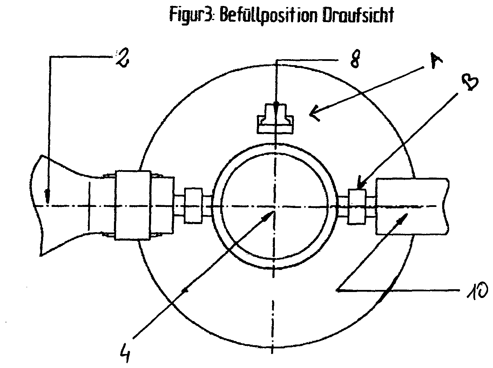

In Figur 3 sind die Positionen beim Befüllen des beweglichen Druckkopfs 1 in Aufsicht dargestellt.

In der ersten Position A wird der Verschlusstopfen 8 der Verschlusseinheit 7 entfernt, der bewegliche Druckkopf 1 anschließend zur einer zweiten Position B bewegt, in der die Verschlusseinheit 7 druckdicht mit einem Extruder 10 gekoppelt wird. In dieser Position erfolgt die Befüllung des Zylinders 5 des beweglichen Druckkopfs 1 mit Kunststoffschmelze.

Nach Beendigung des Befüllvorgangs wird der bewegliche Druckkopf 1 erneut zur ersten Position A bewegt, in der die Verschlusseinheit 7 wieder mit dem Verschlussstopfen 8 verschlossen wird.

## Patentansprüche

1. Vorrichtung zur Herstellung dreidimensionaler Formteile (3) definierter Form
durch aufeinanderfolgende Ablagerung von mehreren Schichten eines sich verfestigenden Kunststoffs auf einem Ablagetisch (12) umfassend:
einen beweglichen Druckkopf (1) bestehend aus einer beheizten Ausdrückeinheit, einer Vorschubeinheit (4) und einer Düse (9), durch die die Kunststoffschmelze zur Herstellung eines dreidimensionalen Formteils aus der Ausdrückeinheit austritt, sowie einer Verschlusseinheit (7), die beim Druckvorgang mit einem Verschlusselement verschlossen ist, wobei der Druckkopf an einem steuerbaren beweglichen Werkzeug fixiert ist, das die für das herzustellende Formteil notwendigen Raumkurven abfahren kann,
einem Extruder (10) zur Aufbereitung der Kunststoffschmelze, der auf einem Befülltisch (11) fixiert ist und zur Befüllung des beweglichen Druckkopfs mit Kunststoffschmelze mit der Verschlusseinheit des beweglichen Druckkopfs druckdicht verbunden wird.

2. Vorrichtung nach Anspruch 1, **dadurch gekennzeichnet, dass** die Ausdrückeinheit in Form eines Tanks oder Zylinders mit einem Ausdrückkolben oder mit einer Förderschnecke ausgeführt ist.

3. Vorrichtung nach Anspruch 2, **dadurch gekennzeichnet, dass** der Ausdrückkolben linear oder durch einen Spindelantrieb bewegt wird.

4. Vorrichtung nach einem der Ansprüche 1 bis 3, **dadurch gekennzeichnet, dass** das steuerbare bewegliche Werkzeug, an dem der Druckkopf fixiert ist, ein Roboterarm oder eine Dreh/Fräsmaschine oder Drehmaschine ist.

5. Vorrichtung nach einem der Ansprüche 1 bis 4, **dadurch gekennzeichnet, dass** der Ablagetisch horizontal und/oder vertikal bewegbar ist.

6. Vorrichtung nach einem der Ansprüche 1 bis 5, **dadurch gekennzeichnet, dass** das Verschlusselement der Verschlusseinheit als Verschlussstopfen oder Verschlussventil ausgeführt ist.

7. Vorrichtung nach einem der Ansprüche 1 bis 5, **dadurch gekennzeichnet,**
**dass** das Verschlusselement der Verschlusseinheit als Ventil ausgeführt ist.

8. Vorrichtung nach einem der Ansprüche 1 bis 7, **dadurch gekennzeichnet, dass** der Extruder zur Aufbereitung der Kunststoffschmelze als Ein- und Mehrschneckenextruder, die gleich- und gegenlaufend sein können, ausgeführt ist.

9. Vorrichtung nach einem der Ansprüche 1 bis 8, **dadurch gekennzeichnet,**
**dass** in der Ausdrückeinheit vor der Düse ein Schmelzefilter situiert ist.

10. Vorrichtung nach einem der Ansprüche 1 bis 9, **dadurch gekennzeichnet,**
**dass** die Beheizung der Ausdrückeinheit elektrisch mit Heizbändern, Heizpatronen, gegebenenfalls auch unter Einsatz von Wärmeträgermedien wie Thermoöl oder Wasser oder Wasserdampf oder Heißluft erfolgt.

11. Verfahren zur Herstellung dreidimensionaler Formteile, **gekennzeichnet**
**durch** folgende Verfahrensschritte:
-) Bereitstellen einer Kunststoffschmelze in einer an einem steuerbaren beweglichen Werkzeug fixierten beheizten Ausdrückeinheit, die mit einer Vorschubeinheit, einer Verschlusseinheit mit einem Verschlusselement und einer Düse zum Durchtritt der Kunststoffschmelze versehen ist und einen beweglichen Druckkopf bildet, wobei die Ausdrückeinheit aus einem Tank verbunden mit einem Ausdrückkolben oder einer Förderschnecke besteht
-) Erzeugen einer relativen Bewegung des beweglichen Druckkopfs in drei Dimensionen zur Ablage der Kunststoffschmelze in einer vorbestimmten Folge und in einem vorbestimmten Muster auf einem Ablagetisch durch Steuerung des beweglichen Werkzeugs, wobei die Steuerung der Vorschubgeschwindigkeit des Ausdrückkolbens bzw. der Förderschnecke über die Vorschubeinheit erfolgt,
-) Erkennen der Notwendigkeit eines Befüllens des beweglichen Druckkopfs durch die Steuerung anhand der Position des Ausdrückkolbens,
-) Bewegen des beweglichen Druckkopfs durch das durch die Steuerung gesteuerten beweglichen Werkzeugs zu einer ersten Position an einem Befülltisch,
-) Öffnen bzw. Entfernen des Verschlusselements der Verschlusseinheit,
-) Bewegen des beweglichen Druckkopfs zu einer zweiten Position am Befülltisch,
-) Verbinden der Verschlusseinheit des beweglichen Druckkopfs mit einem Extruder in der Weise, dass eine druckdichte Verbindung zwischen Verschlusseinheit und Extruder entsteht,
-) Befüllen der Ausdruckeinheit des beweglichen Druckkopf mit Kunststoffschmelze aus dem Extruder,
-) Bewegen des befüllten beweglichen Druckkopfs zur ersten Position am Befülltisch,
-) Verschließen der Verschlusseinheit mit dem Verschlusselement
-) Fortsetzen der Ablage der Kunststoffschmelze in einer vorbestimmten Folge und in einem vorbestimmten Muster auf einem Trägerteil zur Herstellung eines dreidimensionalen Formteils.

12. Verfahren nach Anspruch 11 **dadurch gekennzeichnet, dass** die Erkennung der Notwendigkeit eines Befüllvorgangs durch einen Lineargeber oder einen Inkrementalgeber erfolgt.

13. Verfahren nach einem der Ansprüche 11 oder 12, **dadurch gekennzeichnet, dass** die Temperatur der Kunststoffschmelze in der Ausdrückeinheit gleich oder höher oder niedriger als die Temperatur im Extruder gehalten wird.

14. Verfahren nach einem der Ansprüche 11 bis 13, **dadurch gekennzeichnet, dass** der Ablagetisch horizontal und/oder vertikal bewegbar ist, wodurch sich die Bewegungen des Druckkopfs und des Ablagetisches bei der Herstellung des dreidimensionalen Formteils überlagern und/oder ergänzen können.

## Claims

1. A device for producing three-dimensional molded parts (3) of defined shape by means of successive deposition of multiple layers of a hardening plastic material on a delivery table (12), comprising:
a movable print head (1) consisting of a heated ejection unit, a feed unit (4) and a nozzle (9) through which the plastic melt for producing the three-dimensional molded part exits the ejection unit, as well as of a closing unit (7) which is closed by a closing element during the printing operation, wherein the print head is fixed to a controllable, movable tool, which can trace the space curves necessary for the molded part to be produced, an extruder (10) for processing the plastic melt, said extruder (10) being fixed to a filling table (11) and connected to the closing unit in a pressure-tight manner for filling the movable print head with plastic melt.

2. The device according to claim 1, **characterized in that** the ejection unit is designed in the shape of a tank or a cylinder with an ejection ram or a screw-conveyor.

3. The device according to claim 2, **characterized in that** the ejection ram is moved linearly or by means of a spindle drive.

4. The device according to one of claims 1 to 3, **characterized in that** the controllable, movable tool to which the print head is fixed is a robot arm or a lathe/milling machine or a lathe.

5. The device according to one of claims 1 to 4, **characterized in that** the delivery table is movable horizontally and/or vertically.

6. The device according to one of claims 1 to 5, **characterized in that** the closing element of the closing unit is designed as a closing plug or a closing valve.

7. The device according to one of claims 1 to 5, **characterized in that** the closing element of the closing unit is designed as a valve.

8. The device according to one of claims 1 to 7, **characterized in that** the extruder for processing the plastic melt is designed as a single- or multi-screw extruder which can be synchronously rotating or counter-rotating.

9. The device according to one of claims 1 to 8, **characterized in that** in the ejection unit a melt filter is situated in front of the nozzle.

10. The device according to one of claims 1 to 9, **characterized in that** the heating of the ejection unit is carried out electrically with heating tapes, heating cartridges and, where applicable also by using heat transfer mediums such as thermal oil or water or steam or hot air.

11. A method for producing three-dimensional molded parts, **characterized by** the following method steps:
-) providing a plastic melt in a heated ejection unit fixed to a controllable, movable tool, said ejection unit being provided with a feed unit, a closing unit with a closing element and a nozzle for the passage of the plastic melt and forming a movable print head, wherein the ejection unit consists of a tank connected to an ejection ram or a screw-conveyor
-) producing a relative movement of the movable print head in three dimensions for the deposition of the plastic melt in a predetermined sequence and a predetermined pattern on the delivery table by controlling the movable tool, wherein the controlling of the feed speed of the ejection ram or the screw-conveyor is carried out by means of the feed unit,
-) detecting the necessity of filling the movable print head by means of the controller based on the position of the ejection ram,
-) moving the movable print head by means of the movable tool controlled by the controller to a first position on a filling table,
-) opening or removing the closing element of the closing unit,
-) moving the movable print head to a second position on the filling table,
-) connecting the closing unit of the movable print head with an extruder in such a manner that a pressure-tight connection is created between closing unit and extruder,
-) filling the ejection unit of the movable print head with plastic melt from the extruder,
-) moving the filled movable print head to the first position on the filling table,
-) closing the closing unit with the closing element
-) continuing the deposition of the plastic melt in a predetermined sequence and in a predetermined pattern on a carrier part for producing a three-dimensional molded part.

12. The method according to claim 11, **characterized in that** the detection of the necessity of a filling operation is carried out by a linear encoder or an incremental encoder.

13. The method according to one of claims 11 or 12, **characterized in that** the temperature of the plastic melt in the ejection unit is kept equal to or higher or lower than the temperature in the extruder.

14. The method according to one of claims 11 to 13, **characterized in that** the delivery table is movable horizontally and/or vertically, whereby the movements of the print head and the delivery table can overlay and/or complement each other during the production of the three-dimensional molded part.

## Revendications

1. Dispositif de fabrication de pièces tridimensionnelles (3) d'une forme définie
par le dépôt successif de plusieurs couches d'une matière plastique se solidifiant sur un plateau de dépôt (12), comprenant :
une tête d'impression mobile (1) constituée d'une unité d'éjection chauffée, d'une unité d'avance (4) et d'une buse (9), grâce à laquelle la matière plastique fondue pour la fabrication d'une pièce tridimensionnelle sort de l'unité d'éjection, ainsi qu'une unité d'obturation (7) qui est obturée avec un élément d'obturation lors du processus d'impression, dans lequel la tête d'impression est fixée à un outil mobile contrôlable qui peut parcourir les courbes dans l'espaces nécessaires pour la fabrication de la pièce,
une extrudeuse (10) pour la préparation de la matière plastique fondue, qui est fixée sur un plateau de remplissage (11) et qui est relié, pour le remplissage de la tête d'impression mobile avec de la matière plastique fondue, de manière étanche à la pression avec l'unité d'obturation de la tête d'impression mobile.

2. Dispositif selon la revendication 1, **caractérisé en ce que** l'unité d'éjection est conçue sous la forme d'un réservoir ou d'un cylindre avec un piston d'éjection ou avec une vis sans fin.

3. Dispositif selon la revendication 2, **caractérisé en ce que** le piston d'éjection est déplacé linéairement ou par un entraînement à broche.

4. Dispositif selon l'une des revendications 1 à 3, **caractérisé en ce que** l'outil mobile contrôlable auquel la tête d'impression est fixée est un bras robotique ou un tour/fraiseuse ou un tour.

5. Dispositif selon l'une des revendications 1 à 4, **caractérisé en ce que** le plateau de dépôt est mobile horizontalement et/ou verticalement.

6. Dispositif selon l'une des revendications 1 à 5, **caractérisé en ce que** l'élément d'obturation de l'unité d'obturation est conçu comme un bouchon d'obturation ou une soupape d'obturation.

7. Dispositif selon l'une des revendications 1 à 5, **caractérisé en ce que** l'élément d'obturation de l'unité d'obturation est conçu comme une soupape.

8. Dispositif selon l'une des revendications 1 à 7, **caractérisé en ce que** l'extrudeuse pour la préparation de la matière plastique fondue est conçue comme une extrudeuse à une vis ou à plusieurs vis qui peuvent tourner dans le même sens ou dans des sens opposés.

9. Dispositif selon l'une des revendications 1 à 8, **caractérisé en ce que**, dans l'unité d'éjection, avant la buse, est disposé un filtre de fonte.

10. Dispositif selon l'une des revendications 1 à 9, **caractérisé en ce que** le chauffage de l'unité d'éjection a lieu de manière électrique avec des bandes chauffantes, des cartouches chauffantes, le cas échéant également à l'aide de fluides caloporteurs comme une huile thermique ou de l'eau ou de la vapeur d'eau ou de l'air chaud.

11. Procédé de fabrication de pièces tridimensionnelles, **caractérisé par** les étapes suivantes :
-) préparation d'une matière plastique fondue dans une unité d'éjection chauffée fixée à un outil mobile contrôlable, qui est munie d'une unité d'avance avec un élément d'obturation et d'une buse pour le passage de la matière plastique fondue et qui constitue une tête d'impression mobile, dans lequel l'unité d'éjection est constituée d'un réservoir relié avec un piston d'éjection ou une vis sans fin
-) réalisation d'un déplacement relatif de la tête d'impression mobile en trois dimensions pour le dépôt de la matière plastique fondue dans un ordre prédéterminé et avec un motif prédéterminé sur un plateau de dépôt grâce au contrôle de l'outil mobile, dans lequel le contrôle de la vitesse d'avance du piston d'éjection resp. de la vis sans fin a lieu par l'intermédiaire de l'unité d'avance,
-) détection de la nécessité d'un remplissage de la tête d'impression mobile par le dispositif de commande à l'aide de la position du piston d'éjection,
-) déplacement de la tête d'impression mobile par l'outil mobile contrôlé par le dispositif de commande vers une première position sur un plateau de remplissage,
-) ouverture resp. retrait de l'élément d'obturation de l'unité d'obturation
-) déplacement de la tête d'impression mobile vers une deuxième position sur le plateau de remplissage,
-) liaison de l'unité d'obturation de la tête d'impression mobile avec une extrudeuse de façon à ce qu'une liaison étanche à la pression soit obtenue entre l'unité d'obturation et l'extrudeuse,
-) remplissage de l'unité d'éjection de la tête d'impression mobile avec de la matière plastique fondue provenant de l'extrudeuse,
-) déplacement de la tête d'impression mobile remplie vers la première position sur le plateau de remplissage,
-) fermeture de l'unité d'obturation avec l'élément d'obturation,
-) continuation du dépôt de la matière plastique fondue dans un ordre prédéterminé et avec un motif prédéterminé sur une pièce support pour la fabrication d'une pièce tridimensionnelle.

12. Procédé selon la revendication 11, **caractérisé en ce que** la détection de la nécessité d'un processus de remplissage a lieu à l'aide d'un capteur linéaire ou d'un capteur incrémental.

13. Procédé selon l'une des revendications 11 ou 12, **caractérisé en ce que** la température de la matière plastique fondue dans l'unité d'éjection est maintenue égale ou supérieure ou inférieure à la température dans l'extrudeuse.

14. Procédé selon l'une des revendications 11 à 13, **caractérisé en ce que** le plateau de dépôt est mobile horizontalement et/ou verticalement, les déplacements de la tête d'impression et du plateau de dépôt se superposant et/ou se complétant ainsi lors de la fabrication de la pièce tridimensionnelle.
